# EUROPEAN PATENT APPLICATION

(11) **EP 2 189 090 A1**
(43) Date of publication of application: **26.05.2010**
(21) Application number: 09176842.4
(22) Date of filing: 24.11.2009
(51) Int. Cl.: A47J 43/08, A21B 7/00

(54) **STIRRING SYSTEM FOR DOMESTIC USE**

(30) Priority: 25.11.2008 IT BS20080217
(71) Applicant: Willcox Investments S.A., Avenue de la Faïencerie, 38 1510 Luxembourg (LU)
(72) Inventor: Veneziani, Lanfranco, I-25081, Bedizzole, BRESCIA (IT)
(74) Representative: Pulieri, Gianluca Antonio

(57) **Abstract**

A stirring system for the preparation of foods such as polenta, jams, bread and similar comprises a cooking compartment (4) of an oven (2) having a torque socket (20) and a stirring device (28) housed in the cooking compartment.

## Description

The present invention relates to a stirring system, in particular for domestic use, for the preparation of foods such as polenta, jams, bread and similar.

It is known that one of the most widely felt disadvantages of small cooking appliances for food preparation, such as blenders, bread machines and kitchen robots in general, is the space they occupy on the work surface of the kitchen.

The kitchen is renowned for being the most intensively used room in the house and the work surfaces present in it are usually needed for the preparation of food or for resting dishes and pans on; rarely are the work surfaces spacious enough to also accommodate kitchen robots and similar.

In addition, when tidying the room, the tendency is to eliminate any utensils from view and leave the counters empty; such condition usually gives a sense of tidiness and cleanliness and enhances the aesthetic features of the kitchen itself.

In such case, kitchen robots would get in the way and cause inconvenience, so much so, as to often be dismantled and stored away.

Such fact reduces their use, in that unwillingly are they then taken out of the store cupboard, reassembled and reutilised.

The purpose of the present invention is to realise a stirring system, in particular for the preparation of polenta, jams, bread and similar, which overcomes the drawbacks spoken of.

Such purpose is achieved by a stirring system made according to claim 1 below. The dependent claims describe embodiment variations.

The characteristics and advantages of the stirring system according to the present invention will be evident from the description given below, by way of a nonlimiting example, according to following figures, wherein:

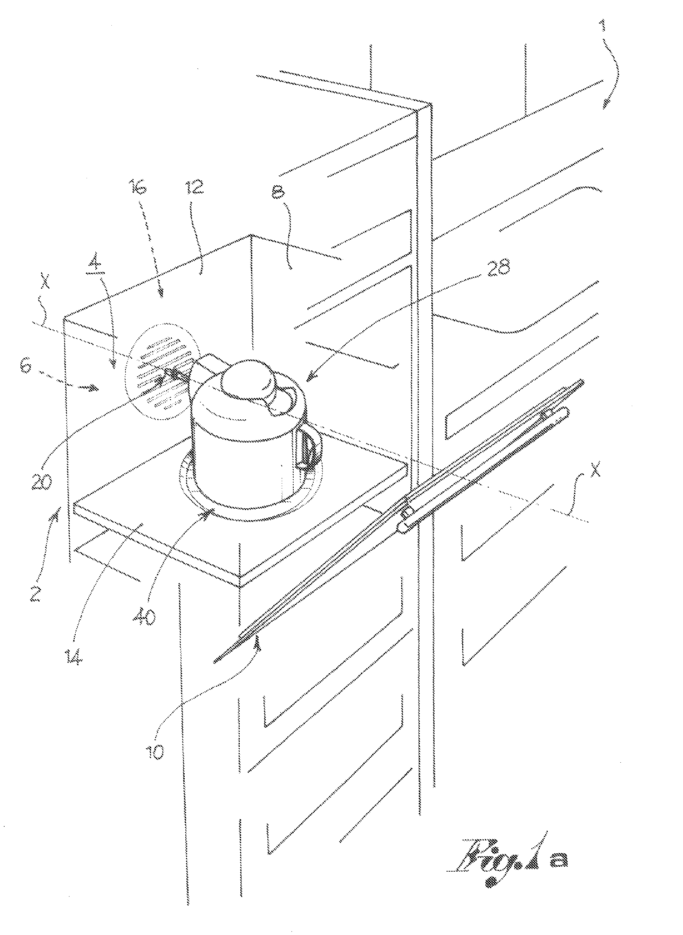

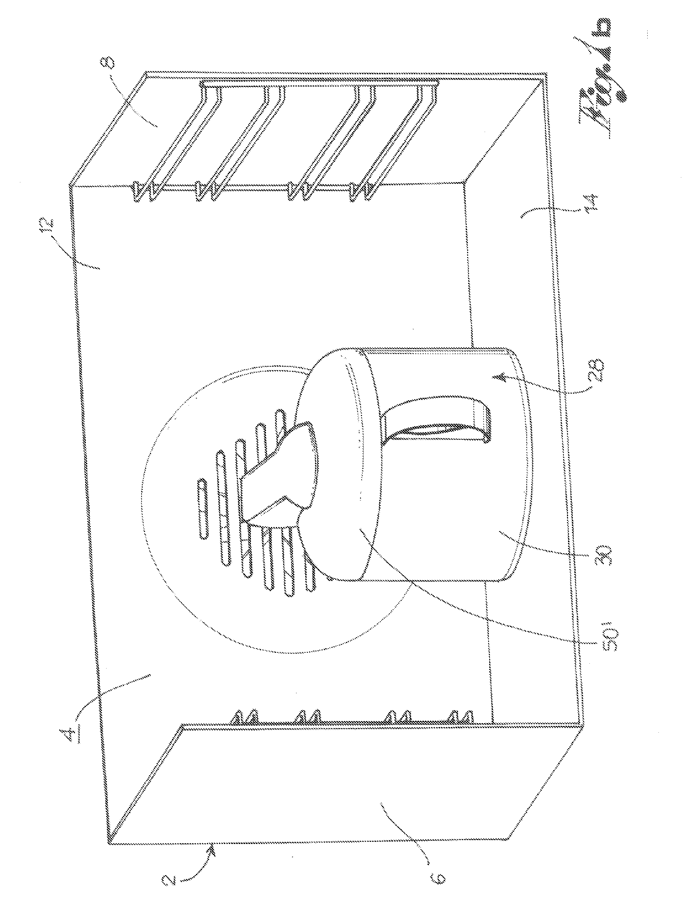

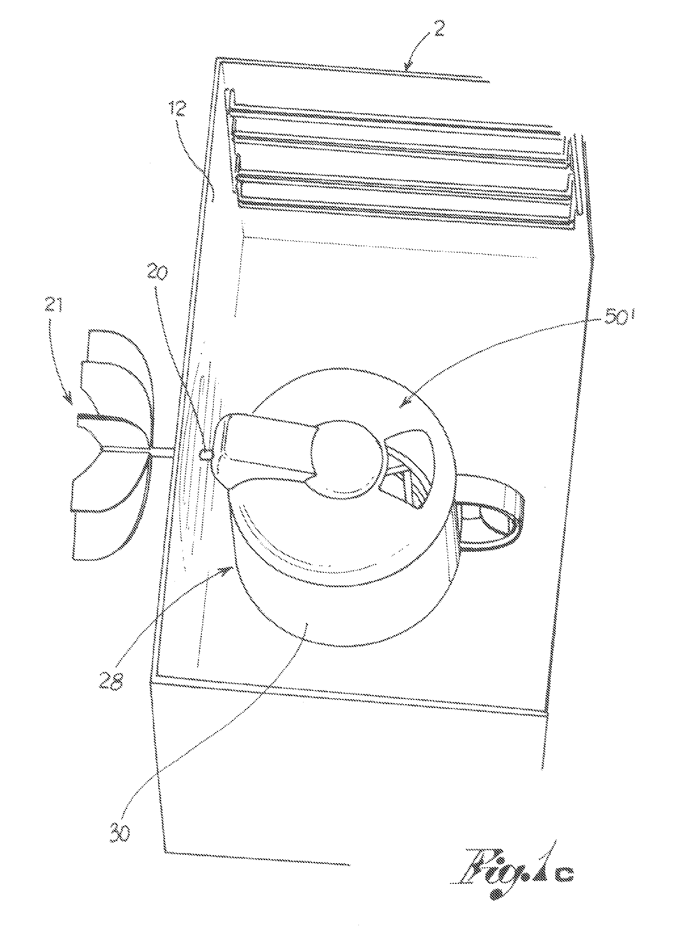

- figures 1a to 1c show views of a stirring system according to an embodiment of the present invention;

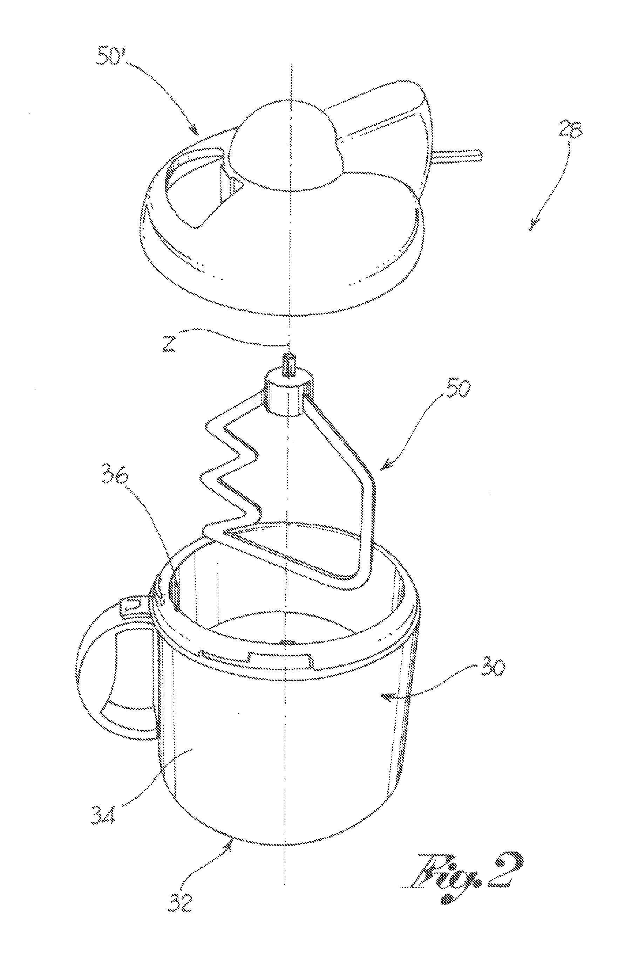

- figure 2 shows a view in separate parts of a stirring device of the system in figure 1; and

- figure 3 shows a view of a stirring system according to a further embodiment of the present invention.

A kitchen 1 comprises an oven 2, for example electric.

The oven 2 comprises an oven body which has

- a cooking compartment 4 inside, and

- lateral walls 6, 8 positioned at the sides widthways;

- a door 10 positioned to close the access aperture, and a back wall 12 positioned opposite the aperture, distanced from it depth ways;

- a lower base 14 and an upper base 16, distanced height ways.

The oven 2 comprises heating devices able to increase the temperature in the cooking compartment 4. For example, the heating devices comprise a lower resistor, positioned under the lower base 14, and/or an upper resistor, positioned above the upper base 16.

According to a preferred embodiment, the lower resistor comprises resistor segments which can be activated separately on command.

In other words, for example, the lower resistor, which extends along the width of the oven under the lower base, comprises three resistor segments, of which two are adjacent to the sides of the lower base and one is central. The oven 2 comprises command means suitable to activate only some of the resistor segments.

In addition, the oven 2 comprises at least one torque socket 20 facing the cooking compartment 4, able to make available a mechanical torque.

For example, the torque socket 20 is coupled, for example coaxially, to a fan 21 for ventilation in the cooking compartment and is positioned on the back wall 12.

The torque socket 20, in the shape shown, makes a mechanical torque available in output along a horizontal axis X-X, which, for example, coincides with the rotation axis of the fan.

The stirring system comprises said oven and a stirring device 28, comprising a container 30 for the preparation of a food, housed in the cooking compartment 4 of the oven.

The container 30 is able to withstand the temperatures reached in the oven for the preparation of the food it contains.

For example, the container 30 comprises a bottom 32 suitable for resting on the lower base 14 of the oven 2, an annular wall 34 projecting from the bottom 32, terminating in a rim 36 which defines an access aperture to the inside.

According to a preferred embodiment, the oven 2 comprises positioning means suitable to position the container 30 in the cooking compartment 4 in a particular position in relation to the torque socket 20, for example on the lower base 14.

For example, the lower base 14 presents a hollow 40 in which the bottom 32 of the container is housable, so as to assume a pre-set position inside the cooking compartment 4.

Preferably, the hollow 40 forms a shaped coupling with the bottom 32 of the container 30 such as to define the angular position of it, to define the positioning in relation to the torque socket 20.

Said hollow constitutes an embodiment of said positioning means.

The stirring device 28 comprises, in addition, mixing devices able to mix the dough being prepared inside the container 30.

For example, the mixing devices comprise a blade 50 turning in the container 30, able to mix the ingredients contained in the container.

Depending on the shape of the blade, which is replaceable, different foods can be prepared.

In the embodiment shown, the blade 50 turns around a vertical axis Z-Z, that is an axis essentially perpendicular to the lower base 14.

The mixing device is operatively connected to the torque socket 20 of the oven 2, in a removable manner.

Preferably, in addition, the stirring device comprises kinematic means suitable to connect the torque socket 20 to the mixing device.

For example, said kinematic means comprise a reduction gear suitable to reduce the number of revs of the torque socket to make the blade rotate at a reduced number of revs.

According to further embodiment, the kinematic means comprise a direction deviator suitable to deviate the direction of the axis to which the torque is made available. For example, the deviator devices comprises a gearbox.

In other words, the deviator is suitable to make a torque available in output, to which the blade 50 is connected along the vertical axis Z-Z having an input torque, to which the torque socket is connected, along the horizontal axis X-X.

Preferably, the stirring device 28 comprises a lid 50 suitable to position itself on the container 30.

The lid 50 houses the kinematic means, that is the deviation device and/or reduction gear, inside it.

Preferably, in addition, the stirring device or its mixing device are operatively connected to the control device of the oven, so that by appropriately programming the control device of the oven, the mixing times and speeds can also be programmed.

During normal use of the stirring system according to the present invention, for example to make polenta, the ingredients: water, salt, polenta flour and oil are poured into the container 30, after taking it out of the oven.

The container 30, containing the blade 50, is closed by the lid, so that the kinematic means are engaged with the blade.

The stirring device is put into the cooking compartment 4 of the oven; the container is positioned in the hollow 40 on the lower base 14, so that the kinematic means engage the torque socket 20 of the oven.

After closing the oven door the torque socket is activated using the available commands, making the blade inside the container rotate.

The cooking time is then selected and the heating devices of the oven activated; preferably, only the central resistor segment, positioned exactly below the hollow 40 is activated, to heat only the part of the lower base 14 which the container 30 is resting on.

After the required time, the polenta is formed in the container.

Should one wish to keep the mixture hot, the rotation of the blade may be interrupted and the temperature in the cooking compartment reduced for heat maintenance only.

The stirring system is also utilisable for the preparation of risottos, stews, soups, jams, for roasting coffee beans, toasting bread, steaming and the like.

For example, in the case of making bread, by programming the oven and the mixing device as required, the entire preparation cycle can be performed, that is mixing, rising and baking.

Innovatively, the stirring system according to the present invention makes available a machine for preparing foods, such as polenta, jams and similar, without taking up space on the worktop of the kitchen.

Advantageously, in addition, the stirring system makes it possible to prepare such foods in safety, in that the hot container is closed in the oven and therefore out of reach of children.

According to a further advantageous aspect, the stirring system according to the present invention makes it possible to leave the hob of the cooker free for the preparation of other foods.

Advantageously, in addition, the stirring system permits energy saving, in that the preparation of the foods takes place in a closed compartment, designed to minimise heat loss, such as that of the oven.

According to a further advantageous aspect, cleaning the container is particularly easy, since it can be taken out of the oven and washed separately, even in the dishwasher.

It is clear that a person skilled in the art may make modifications to the stirring system described above.

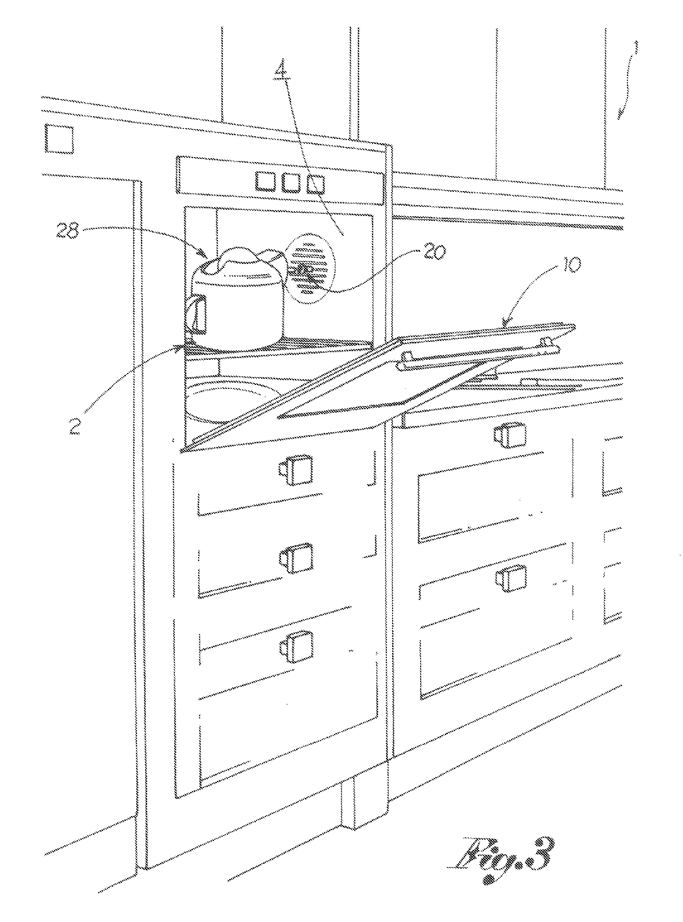

According to one embodiment variation for example the torque socket is on a different wall of the oven from the back wall and, for example, two torque sockets are provided: one for the fan and one for the stirring device (figure 3).

According to yet a further embodiment variation the torque socket is permanently connected to a gear reducer; the kinematic means of the stirring device engage with said gear reducer of the oven, which remains attached to the fan when the device is taken out of the oven.

Such variations also fall within the sphere of protection defined by the following claims.

## Claims

1. Stirring system for the preparation of doughy foods, such as polenta, jams, bread and similar, comprising:
- a cooking compartment (4) of an oven (2) having a torque socket (20);
- a stirring device (28) lodged in the cooking compartment, comprising:
a) a container (30) able to withstand the temperatures reached in the oven for the preparation of the designated food;
b) a mixing device able to mix the ingredients contained in the container (30), connected to the torque socket (20) in a detachable manner.

2. System according to claim 1, wherein the stirring device comprises a reduction gear, connected to the mixing device and connectable to the torque socket.

3. System according to claim 1 or 2, wherein the stirring device comprises deviator devices to deviate the direction of the axis to which the torque is made available by the torque socket.

4. System according to any of the previous claims, comprising means of positioning to position the stirring device in a pre-set position in relation to the torque socket.

5. System according to claim 4, wherein the means of positioning comprise a hollow (40) made in the lower base (14) of the body of the oven.

6. System according to any of the previous claims, comprising heating devices for heating the oven.

7. System according to claim 6, wherein the heating devices comprise a lower resistor positioned below a lower base (14) of the oven (2), divided into heating segments, activated independently.

8. System according to any of the previous claims, wherein the torque socket holds a fan for the internal ventilation of the oven (2).

9. System according to any of the previous claims, wherein the torque socket of the oven comprises a reduction gear permanently attached to it.

10. System according to any of the previous claims, wherein the mixing device comprises a replaceable mixing blade (50).

11. System according to any of the previous claims, wherein the mixing device can be operated by the oven programming mechanism to set the mixing time and speed.
